# EUROPÄISCHE PATENTANMELDUNG

(11) **EP 3 858 659 A1**
(43) Veröffentlichungstag der Anmeldung: **04.08.2021**
(21) Anmeldenummer: 21154094.3
(22) Anmeldetag: 28.01.2021
(51) Int. Cl.: B60N 2/14

(54) **SITZKONSOLE FÜR EIN FAHRZEUG: VERFAHREN ZUR BEDIENUNG EINER SCHWENKBAREN SITZKONSOLE EINES FAHRZEUGS; VERFAHREN ZUM AUS- ODER NACHRÜSTEN EINES FAHRZEUGSITZES EINES FAHRZEUGS MIT EINER SCHWENKFUNKTION**

(30) Priorität: 28.01.2020 DE 102020102009
(71) Anmelder: AMF-Bruns GmbH & Co. KG, 26689 Apen (DE); Veigel GmbH + Co. KG, 74613 Öhringen (DE)
(72) Erfinder: BAUER, Markus, 74831 Gundelsheim (DE)
(74) Vertreter: Eisenführ Speiser

(57) **Zusammenfassung**

Es werden eine Sitzkonsole (1) für ein Fahrzeug, ein Verfahren zur Bedienung einer schwenkbaren Sitzkonsole (1) eines Fahrzeugs und ein Verfahren zum Aus- oder Nachrüsten eines Fahrzeugsitzes eines Fahrzeugs mit einer Schwenkfunktion vorgeschlagen, wobei ein Ein- und Aussteigen insbesondere für ältere und/oder für Personen mit körperlichen Einschränkungen erleichtert wird, ohne dass durch die Verwendung der Sitzkonsole (1) die werkseitig vorhandenen Verstellmöglichkeiten (z.B. Längs-, Höhen-, Neigungsverstellung) des herkömmlichen Sitzgestells beeinträchtigt werden, da die Sitzkonsole (1) eine Schwenkplatte (3) zur Verbindung der Sitzkonsole 1 mit einem Fahrzeugsitz und eine Grundplatte (2) zur Verbindung der Sitzkonsole (1) mit dem Fahrzeug aufweist, wobei die Grundplatte (2) Schienen (5) aufweist, durch die der Fahrzeugsitz linear verschiebbar ist, wobei zwischen der Schwenkplatte (3) und der Grundplatte (2) eine an den Schienen (5) der Grundplatte (2) fixierte Lagerplatte (4) angeordnet ist und die Schwenkplatte (3) und die Lagerplatte (4) über ein lagerbildendes Mittel miteinander verbunden sind.

## Beschreibung

Die Erfindung geht aus von einer Sitzkonsole für ein Fahrzeug, nach der Gattung des Anspruchs 1, einem Verfahren zur Bedienung einer schwenkbaren Sitzkonsole eines Fahrzeugs nach der Gattung des Anspruchs 13, und einem Verfahren zum Aus- oder Nachrüsten eines Fahrzeugsitzes eines Fahrzeugs mit einer Schwenkfunktion nach der Gattung des Anspruchs 16.

In Kraftfahrzeugen werden insbesondere auf der Fahrerseite, als auch auf der Beifahrerseite Fahrzeugsitze verbaut, die verschiedene Verstellmöglichkeiten wie Längs-, Höhen-, Neigungsverstellung und andere Einstellmöglichkeiten beinhalten. Diese können elektrisch oder mechanisch betätigt werden.

Für ältere und/oder Personen mit körperlichen Einschränkungen ist ein Ein- und/oder Aussteigen aus einem Fahrzeug oftmals sehr mühsam und anstrengend, da hierbei insbesondere der Schweller eines Fahrzeuges überwunden werden muss. Hinzu kommt, dass bauartbedingt die Schweller in Kraftfahrzeugen immer breiter werden, so dass das Ein- und Aussteigen in bzw. aus diesen insbesondere für ältere und/oder behinderte Personen immer schwieriger wird.

Es sind Schwenksitze als Ein- und Ausstiegshilfe für Personen mit körperlichen Einschränkungen und/oder Senioren bekannt, die eine fahrzeugspezifische Konsole aufweisen, die im Fahrzeug verschraubt werden und um eine Achse um 90° aus dem Fahrzeug geschwenkt werden. Zwar wird dadurch das Ein- bzw. Aussteigen erleichtert, doch gehen hierbei bei den herkömmlichen Sitzgestellen wichtige Verstellmöglichkeiten des Sitzes, wie z.B. Höhen- und Neigungsverstellung, verloren oder können zumindest nicht mehr gewährleistet werden. Zudem werden elektrische Sitze nicht mehr verwendet und durch einen Sitz mit mechanischer Verstellung ersetzt.

Der Erfindung liegt daher die Aufgabe zugrunde, eine die Nachteile des Standes der Technik überwindende Sitzkonsole für ein Fahrzeug, ein die Nachteile des Standes der Technik überwindendes Verfahren zur Bedienung einer schwenkbaren Sitzkonsole eines Fahrzeugs und ein die Nachteile des Standes der Technik überwindendes Verfahren zum Aus- oder Nachrüsten eines Fahrzeugsitzes eines Fahrzeugs mit einer Schwenkfunktion bereitzustellen. Aufgabe ist insbesondere, eine Sitzkonsole für ein Fahrzeug und ein Verfahren bereitzustellen, die auf konstruktiv einfache Weise bequem bedienbar bzw. anwendbar sind.

Die erfindungsgemäße Sitzkonsole für ein Fahrzeug, mit den Merkmalen des Anspruchs 1, das erfindungsgemäße Verfahren zur Bedienung einer schwenkbaren Sitzkonsole eines Fahrzeugs, mit den Merkmalen des Anspruchs 13, und das erfindungsgemäße Verfahren zum Aus- oder Nachrüsten eines Fahrzeugsitzes eines Fahrzeugs mit einer Schwenkfunktion, mit den Merkmalen des Anspruchs 16, lösen die genannten Aufgaben und haben den bekannten Lösungen gegenüber den Vorteil, dass das Ein- und Aussteigen insbesondere für ältere und/oder für Personen mit körperlichen Einschränkungen erleichtert wird, ohne dass durch die Verwendung der erfindungsgemäßen Sitzkonsole die werkseitig vorhandenen Verstellmöglichkeiten (z.B. Längs-, Höhen-, Neigungsverstellung) des herkömmlichen Sitzgestells beeinträchtigt werden. Ferner wird die Bedienbarkeit mit vergleichsweise einfachen konstruktiven Mittel verbessert. Die erfindungsgemäße Sitzkonsole weist eine Schwenkplatte zur Verbindung der Sitzkonsole mit einem Fahrzeugsitz und eine Grundplatte zur Verbindung der Sitzkonsole mit dem Fahrzeug auf, wobei die Grundplatte Schienen aufweist, durch die der Fahrzeugsitz linear verschiebbar ist, wobei zwischen der Schwenkplatte und der Grundplatte eine an den Schienen der Grundplatte fixierte Lagerplatte angeordnet ist und die Schwenkplatte und die Lagerplatte über ein lagerbildendes Mittel, insbesondere ein Drehlager, miteinander verbunden sind, wobei die Sitzkonsole ferner einen Energiespeicher, insbesondere eine Gasdruckfeder, aufweist, wobei der Energiespeicher dazu eingerichtet ist, den Fahrzeugsitz aus einer Grundstellung mittels einer kombinierten linearen Bewegung entlang der Schienen und einer Drehbewegung um das Drehlager in eine ausgeschwenkte Endstellung zu verschieben. Dadurch, dass die Sitzkonsole einen Energiespeicher aufweist, lässt sich die Bedienbarkeit für Benutzer deutlich bei geringem konstruktiven Aufwand erhöhen. Zur Betätigung der Sitzkonsole und zum Bringen in die ausgeschwenkte Stellung wird die gespeicherte Energie des Energiespeichers genutzt, um die Schwenkbewegung und/oder lineare Bewegung wenigstens zu unterstützen oder vollständig zu nutzen, um den Fahrzeugsitz mindestens teilweise oder vollständig in die ausgeschwenkte Endstellung zu verschieben. Auf beispielsweise elektrische oder hydraulische Antriebe kann durch die erfindungsgemäße Verwendung eines derartigen Energiespeichers erfindungsgemäß verzichtet werden. Der Energiespeicher stellt sozusagen ein autonomes System dar, um die erforderliche Energie zum Unterstützen oder Durchführen der Schwenkbewegung und/oder lineare Bewegung bereitzustellen. Hierzu braucht dann lediglich ein Auslöser oder dergleichen betätigt zu werden. Im Falle einer Gasdruckfeder weist diese vorzugsweise einen Druckgas aufnehmenden Zylinder und einen Kolben und eine mit diesem gekoppelte Kolbenstange auf, welche mechanisch gekoppelt ist und im Betrieb einwirkt auf die Sitzkonsole, um die erfindungsgemäßen Bewegungen der Komponenten zu bewirken. Alternativ kann statt einer Gasdruckfeder eine mechanische Feder, insbesondere eine Spiralfeder, vorzugsweise aus Metall, als autonomer Energiespeicher erfindungsgemäß eingesetzt werden.

Nach einer vorteilhaften Ausgestaltung der erfindungsgemäßen Sitzkonsole ist der Energiespeicher ein mechanischer Energiespeicher, insbesondere eine autonome Gasdruckfeder oder mechanische Feder wie eine Spiralfeder, und dazu eingerichtet, die Bewegung des Fahrzeugsitzes aus der Grundstellung in die Endstellung autonom - ohne zusätzliche Energiequellen - zu bewirken.

Nach einer vorteilhaften Ausgestaltung der erfindungsgemäßen Sitzkonsole weist das lagerbildende Mittel, insbesondere das Drehlager, eine an der Lagerplatte angeordnete Lagerbuchse und einen an der Schwenkplatte angeordneten Lagerbolzen auf.

Nach einer zusätzlichen vorteilhaften Ausgestaltung der erfindungsgemäßen Sitzkonsole weist das lagerbildende Mittel einen Drehpunkt auf, der außermittig an der Sitzkonsole angeordnet ist.

Nach einer zusätzlichen vorteilhaften Ausgestaltung der erfindungsgemäßen Sitzkonsole weist die Grundplatte eine Zahnstange auf, in die ein an der Schwenkplatte, insbesondere an dem Drehlager, angeordnetes Zahnrad formschlüssig eingreift.

Nach einer zusätzlichen vorteilhaften Ausgestaltung der erfindungsgemäßen Sitzkonsole weist die Sitzkonsole eine Verriegelungseinrichtung und/oder einen Elektromotor auf. Durch die Verriegelungseinrichtung ist die erfindungsgemäße Sitzkonsole in mindestens einer Position (z.B. in der Grundstellung) arretierbar.

Nach einer diesbezüglichen vorteilhaften Ausgestaltung der erfindungsgemäßen Sitzkonsole weist die Verriegelungseinrichtung ein an der Schwenkplatte angeordnetes Schloss und einen an der Grundplatte angeordneten Schlossbügel auf.

Nach einer zusätzlichen vorteilhaften Ausgestaltung der erfindungsgemäßen Sitzkonsole weist die Verriegelungseinrichtung einen an der Schwenkplatte angeordneten Auslöser auf.

Nach einer diesbezüglichen vorteilhaften Ausgestaltung der erfindungsgemäßen Sitzkonsole ist der Auslöser mittels eines Bowdenzugs mit der Verriegelungseinrichtung verbunden.

Nach einer zusätzlichen vorteilhaften Ausgestaltung der erfindungsgemäßen Sitzkonsole ist zwischen der Grundplatte und der Lagerplatte, ein Energiespeicher, insbesondere eine Gasdruckfeder, angeordnet.

Nach einer zusätzlichen vorteilhaften Ausgestaltung der erfindungsgemäßen Sitzkonsole weist die Sitzkonsole zur Begrenzung der linearen Verschiebbarkeit des Fahrzeugsitzes einen Anschlag auf, wobei der Anschlag verstellbar und dazu eingerichtet ist, die lineare Bewegung des Fahrzeugsitzes zu begrenzen. Da durch den Anschlag die lineare Verschiebbarkeit der Lagerplatte begrenzt wird, ergibt sich eine Begrenzung des Ausschwenkwinkels der Schwenkplatte.

Nach einer diesbezüglichen vorteilhaften Ausgestaltung der erfindungsgemäßen Sitzkonsole ist der Anschlag verstellbar.

Nach einer vorteilhaften Ausgestaltung der erfindungsgemäßen Sitzkonsole ist Bowdenzug wenigstens teilweise zwischen der Grundplatte und der Schwenkplatte angeordnet.

In einem zweiten Aspekt wird die der Erfindung zu Grunde liegenden Aufgabe durch eine Sitzkonsole mit den Merkmalen des Anspruchs 11 gelöst, wobei die Sitzkonsole insbesondere nach einer der vorstehend beschriebenen bevorzugten Ausführungsformen ausgebildet ist, mit einer Schwenkplatte zur Verbindung der Sitzkonsole mit einem Fahrzeugsitz und mit einer Grundplatte zur Verbindung der Sitzkonsole mit dem Fahrzeug, wobei die Grundplatte Schienen aufweist, durch die der Fahrzeugsitz linear verschiebbar ist, wobei zwischen der Schwenkplatte und der Grundplatte eine an den Schienen der Grundplatte fixierte Lagerplatte angeordnet ist, wobei die Schwenkplatte und die Lagerplatte über ein Drehlager miteinander verbunden sind, wobei die Sitzkonsole ferner ein Gurtschloss aufweist, wobei das Gurtschloss an oder auf der Schwenkplatte angeordnet, insbesondere fixiert, ist. Das Gurtschloss ist zur Aufnahme eines Sitzgurtes eingerichtet. Die Montage des Gurtschlosses auf der Schwenkplatte vereinfacht ein Nachrüsten der Sitzkonsole in ein Fahrzeug. Beispielsweise muss bei der Verwendung eines Nachrüstsitzes, also ein anderer Fahrzeugsitz, als der vom Fahrzeughersteller serienmäßig verbaute, das Gurtschloss nicht auf dem Fahrzeugboden montiert werden. Somit bleibt die Sitzplatzerkennung, die mit dem Gurtschloss gekoppelt ist, erhalten. Zudem führt das Gurtschloss hiermit die Linear- und/ oder Drehbewegung auf der Sitzkonsole mit aus, sodass das Gurtschloss die Bewegung der Sitzkonsole nicht stören oder behindern kann. Auch wird hinsichtlich dieses Aspektes der Erfindung auf die zuvor beschriebenen Vorteile der Erfindung gemäß des ersten Aspektes Bezug genommen.

In einem dritten Aspekt wird die der Erfindung zu Grunde liegenden Aufgabe durch ein Verfahren zur Bedienung einer schwenkbaren Sitzkonsole eines Fahrzeugsitzes eines Fahrzeugs gelöst, wobei die Sitzkonsole nach einer der vorstehend beschriebenen bevorzugten Ausführungsformen ausgebildet ist.

Das Verfahren umfasst die Schritte: Betätigung eines Auslösers, Entriegelung einer Verriegelungseinrichtung, lineares Verschieben des Fahrzeugsitzes aus einer Grundstellung in eine Endstellung, Drehen des Fahrzeugsitzes um ein Drehlager der Sitzkonsole aus einer Grundstellung in eine Endstellung, wobei das lineare Verschieben und/oder das Drehen des Fahrzeugsitzes zumindest abschnittsweise, vorzugsweisegleichzeitig, erfolgt und durch von einem Energiespeicher bereitgestellte mechanische Energie unterstützt wird.

In einem vierten Aspekt wird die der Erfindung zu Grunde liegenden Aufgabe durch ein Verfahren zum Aus- oder Nachrüsten eines Fahrzeugsitzes eines Fahrzeugs mit einer schwenkbaren Sitzkonsole gelöst, wobei die Sitzkonsole nach einer der vorstehend beschriebenen bevorzugten Ausführungsformen ausgebildet ist (Anspruch 16).

Das Verfahren umfasst die Schritte: Trennen eines Fahrzeugsitzes von seinem Sitzgestell, Einsetzen der schwenkbaren Sitzkonsole zwischen dem Fahrzeugsitz und dem Sitzgestell, Verbinden einer Schwenkplatte der Sitzkonsole mit dem Fahrzeugsitz, Verbinden und einer Grundplatte der Sitzkonsole mit dem Fahrzeug.

Hinsichtlich der Vorteile der erfindungsgemäßen Verfahren und ihrer Ausführungsformen wird auf die vorstehenden Erläuterungen der erfindungsgemäßen Sitzkonsole verwiesen

Nach einer vorteilhaften Ausgestaltung des erfindungsgemäßen Verfahren zur Bedienung einer schwenkbaren Sitzkonsole eines Fahrzeugs, wobei die Sitzkonsole eine Schwenkplatte zur Verbindung der Sitzkonsole mit dem Fahrzeugsitz und eine Grundplatte zur Verbindung der Sitzkonsole mit dem Fahrzeug aufweist, wobei die Grundplatte Schienen aufweist, durch die der Fahrzeugsitz aus einer Grundstellung in eine Endstellung bzw. aus einer Endstellung in eine Grundstellung linear verschiebbar ist und zwischen der Schwenkplatte und der Grundplatte eine an den Schienen der Grundplatte fixierte Lagerplatte angeordnet ist und die Schwenkplatte und die Lagerplatte über ein lagerbildendes Mittel miteinander verbunden sind, wodurch gleichzeitig zur Linearbewegung des Fahrzeugsitzes eine Drehbewegung des Fahrzeugsitzes realisiert wird, weist die Sitzkonsole eine einen Auslöser aufweisende Verriegelungseinrichtung auf und ist zwischen der Grundplatte und der Lagerplatte eine Gasdruckfeder angeordnet, wodurch nach einem Öffnen der Verriegelungseinrichtung mittels des Auslösers die Lagerplatte mittels der Gasdruckfeder aus ihrer Grundstellung in eine Endstellung bewegt wird.

Nach einer diesbezüglichen vorteilhaften Ausgestaltung des erfindungsgemäßen Verfahrens ist der Auslöser nur bei einer geöffneten Fahrzeugtür und/oder bei einem ausgeschalteten Motor betätigbar. Die Konsole kann ansonsten jederzeit, unabhängig von der Fahrzeugtür und dem Motor, betätigt werden.

Nach einer zusätzlichen vorteilhaften Ausgestaltung des erfindungsgemäßen Verfahrens weist die Sitzkonsole einen verstellbaren Anschlag auf, durch dessen Verstellung die lineare Verschiebbarkeit des Fahrzeugsitzes einstellbar ist. Der verstellbare Anschlag begrenzt die Bewegung der Lagerplatte, wodurch der Schwenkwinkel der Schwenkplatte eingestellt bzw. begrenzt werden kann.

Nach einer zusätzlichen vorteilhaften Ausgestaltung des erfindungsgemäßen Verfahrens wird als Sitzkonsole eine Sitzkonsole nach einer der vorstehend beschriebenen bevorzugten Ausführungsformen eingesetzt.

Nach einer vorteilhaften Ausgestaltung des erfindungsgemäßen Verfahrens zum Aus- oder Nachrüsten eines Fahrzeugsitzes eines Fahrzeugs mit einer Schwenkfunktion, bei dem ein Fahrzeugsitz von seinem Sitzgestell getrennt wird, um anschließend zwischen dem Fahrzeugsitz und dem Sitzgestell eine schwenkbare Sitzkonsole einzubauen, wobei die Sitzkonsole eine Schwenkplatte zur Verbindung der Sitzkonsole mit dem Fahrzeugsitz und eine Grundplatte zur Verbindung der Sitzkonsole mit dem Fahrzeug aufweist, wobei die Grundplatte Schienen aufweist, durch die der Fahrzeugsitz aus einer Grundstellung in eine Endstellung bzw. aus einer Endstellung in eine Grundstellung linearverschiebbar ist, wobei zwischen der Schwenkplatte und der Grundplatte eine an den Schienen der Grundplatte fixierte Lagerplatte angeordnet ist und die Schwenkplatte und die Lagerplatte über ein lagerbildendes Mittel miteinander verbunden sind, wodurch gleichzeitig zur Linearbewegung des Fahrzeugsitzes eine Drehbewegung des Fahrzeugsitzes realisiert wird, bleiben durch den Einbau der Sitzkonsole werkseitig vorhandene Verstellmöglichkeiten soweit möglich und/oder Sicherheitseinrichtungen des Sitzgestells erhalten.

Nach einer zusätzlichen vorteilhaften Ausgestaltung des erfindungsgemäßen Verfahrens wird als Sitzkonsole eine Sitzkonsole nach einer der vorstehend beschriebenen bevorzugten Ausführungsformen eingesetzt und/oder ermöglicht ein mit einer Sitzkonsole aus- oder nachgerüsteter Fahrzeugsitz eines Fahrzeugs ein Verfahren zur Bedienung einer schwenkbaren Sitzkonsole eines Fahrzeugs gemäß einem der vorstehend beschriebenen bevorzugten Ausführungsformen.

Weitere Vorteile und vorteilhafte Ausgestaltungen der Erfindung sind der nachfolgenden Beschreibung, den Ansprüchen und der Zeichnung entnehmbar.

Bevorzugte Ausführungsbeispiele der erfindungsgemäßen Gegenstände sind in der Zeichnung dargestellt und werden im Folgenden näher erläutert. Es zeigen
- Fig. 1: eine Explosionszeichnung einer erfindungsgemäßen Sitzkonsole in einer ersten Ausführungsform,
- Fig. 2: eine perspektivische Ansicht einer erfindungsgemäßen Sitzkonsole, gemäß Fig. 1,
- Fig. 3: eine Ansicht der erfindungsgemäßen Sitzkonsole, gemäß Fig. 1, von oben,
- Fig. 4: eine weitere Ansicht der erfindungsgemäßen Sitzkonsole, gemäß Fig. 1, von oben,
- Fig. 5: eine weitere Ansicht der erfindungsgemäßen Sitzkonsole von oben,
- Fig. 6: eine Ansicht der erfindungsgemäßen Sitzkonsole, gemäß Fig. 1, von unten,
- Fig. 7: eine Seitenansicht der erfindungsgemäßen Sitzkonsole, gemäß Fig. 1,
- Fig. 8: eine weitere Seitenansicht der erfindungsgemäßen Sitzkonsole, gemäß Fig. 1,
- Fig. 9: eine weitere Seitenansicht der erfindungsgemäßen Sitzkonsole, gemäß Fig. 1, sowie
- Fig. 10: eine perspektivische Ansicht einer erfindungsgemäßen Sitzkonsole in einer zweiten Ausführungsform.

Einander entsprechende Teile sind in allen Zeichnungsfiguren mit den gleichen Bezugszahlen versehen.

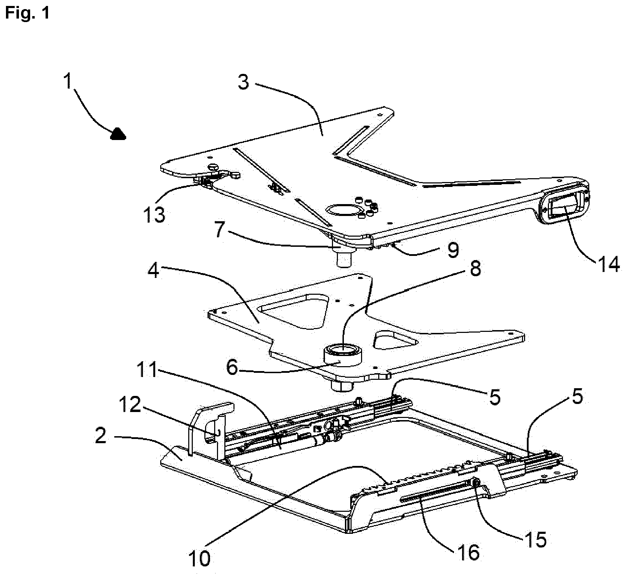

Fig. 1 zeigt eine Explosionszeichnung einer erfindungsgemäßen Sitzkonsole 1, die aufgrund ihrer Funktion auch als Schwenkkonsole bezeichnet werden kann. Die erfindungsgemäße Sitzkonsole 1 ist für ein einfaches Ein- und Aussteigen in/aus ein/einem Fahrzeug konzipiert. Die Zielgruppe sind Senioren und Personen mit Mobilitätseinschränkungen. Die Sitzkonsole 1 ist in nicht gezeigter Weise an einem Sitzgestell montierbar, welches mit der Struktur des Fahrzeugs verbunden ist oder Teil dieser ist.

Die erfindungsgemäße Sitzkonsole 1 unterteilt sich in drei Hauptbaugruppen, nämlich eine Grundplatte 2, eine Schwenkplatte 3 und eine zwischen der Grundplatte 2 und der Schwenkplatte 3 angeordneten Lagerplatte 4. Auf der Grundplatte 2 sind Schienen 5, mit denen auch die Lagerplatte 4 verschraubt ist, montiert, wodurch sich die Lagerplatte 4 zu der Grundplatte 2 auf den Schienen 5 aus einer Grundstellung in eine Endlinearstellung verschieben lässt.

Die erfindungsgemäße Sitzkonsole 1 weist ein lagerbildendes Mittel, insbesondere ein Drehlager, auf, das eine an der Lagerplatte 4 angeordneten Lagerbuchse 6, die bevorzugt mit der Lagerplatte 4 verschweißt ist, und einen Lagerbolzen 7, der an der Schwenkplatte 3 angeordnet ist, aufweist. Der Lagerbolzen 7 der Schwenkplatte 3 wird in die Lagerbuchse 6 der Lagerplatte 4 gesteckt und von unten verschraubt. Das lagerbildende Mittel weist einen Drehpunkt 8 auf, der außermittig an der erfindungsgemäße Sitzkonsole 1 angeordnet ist. Der Drehpunkt 8 ist auf einer Schwenkachse angeordnet, wobei sich die Schwenkachse im Wesentlichen orthogonal zu der Schwenkplatte 3 erstreckt. Die Schwenkplatte 3 ist um die Schwenkachse drehbar. Selbstverständlich könnte in einem anderen Ausführungsbeispiel auch der Lagerbolzen 7 an der Lagerplatte 4 und die Lagerbuchse 6 an der Schwenkplatte 3 angeordnet werden.

An der Schwenkplatte 3 ist ein Zahnrad 9 angeordnet, das formschlüssig in eine an der Grundplatte 2 angeordnete Zahnstange 10 eingreift. Vorzugsweise ist das Zahnrad 9 an oder benachbart zu dem Lagerbolzen 7 angeordnet.

An der Grundplatte 2 ist eine Gasdruckfeder 11 angeordnet, die mit der Lagerplatte 4 wirkverbunden ist. Die Gasdruckfeder 11 ist ein Ausführungsbeispiel eines Energiespeichers, der zur Betätigung der Sitzkonsole 1 und zum Bringen in die ausgeschwenkte Stellung verwendet wird. Zu diesem Zweck wird die gespeicherte Energie des Energiespeichers, im Ausführungsbeispiel der Gasdruckfeder 11, genutzt, um die Schwenkbewegung und/oder lineare Bewegung wenigstens zu unterstützen oder vollständig zu nutzen, um den Fahrzeugsitz mindestens teilweise oder vollständig in die ausgeschwenkte Endstellung zu verschieben.Der Energiespeicher stellt ein autonomes System dar, um die Energie zum Unterstützen oder Durchführen der Schwenkbewegung und/oder lineare Bewegung bereitzustellen. Der Energiespeicher ist mechanisch gekoppelt mit der Sitzkonsole. Alternativ kann statt einer Gasdruckfeder 11 eine nicht gezeigte mechanische Feder, insbesondere eine Spiralfeder, vorzugsweise aus Metall, als autonomer Energiespeicher eingesetzt werden.

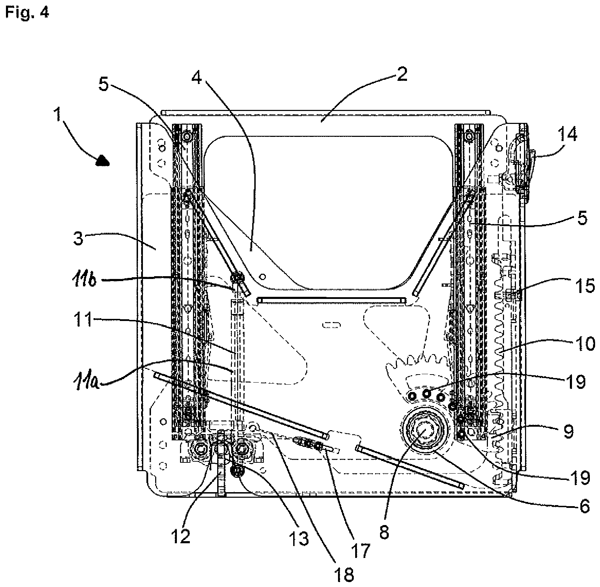

Wie insbesondere Figur 4 zeigt, weist die Gasdruckfeder 11 einen Zylinder 11a und einen in dem Zylinder 11a beweglich geführten Kolben 11b auf. Der Zylinder ist an der Grundplatte 2 montiert. Der Kolben 11b der Gasdruckfeder 11 ist mit der Lagerplatte 4 verbunden.

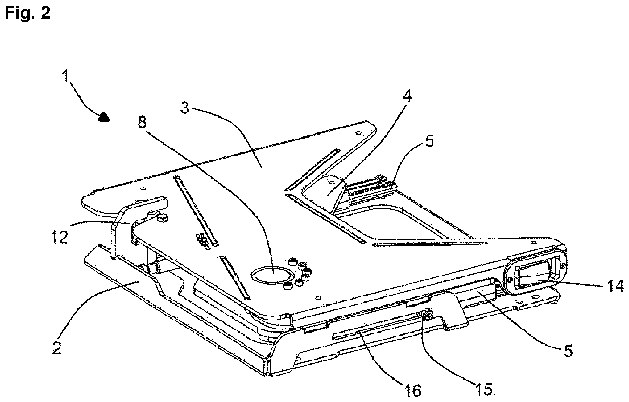

Zusätzlich weist die Grundplatte 2 einen Schlossbügel 12 auf, der mit einem Schloss 13, welches an der Schwenkplatte 3 angeordnet ist eine Verriegelungseinrichtung bildet, durch die ein nicht dargestellter Fahrzeugsitz in einer Grundstellung arretierbar ist. In der Grundstellung ist das Schloss 13 in dem Schlossbügel 12 lösbar fixiert, wie dies beispielsweise in Figur 2 gezeigt ist. Dies bewirkt eine Arretierung der Bewegung der Schwenkplatte 3 gegenüber der Grundplatte 2. Gleichzeitig wird somit ebenfalls eine Arretierung der Lagerplatte 4 erreicht, die mit der Grundplatte 2 und der Schwenkplatte 3 in Wirkverbindung steht. Selbstverständlich könnte in einem anderen Ausführungsbeispiel auch der Schlossbügel 12 an der Schwenkplatte 3 und das Schloss 13 an der Grundplatte 2 angeordnet werden. Zum Betätigen der Verriegelungseinrichtung ist an der Schwenkplatte 3 ein Auslöser 14 angeordnet, der über einen nicht dargestellten Bowdenzug mit dem Schloss 13 in Wirkverbindung steht.

In der Grundstellung der Sitzkonsole 1 befindet sich die den autonomen Energiespeicher bildende Gasdruckfeder 11 in einem vorgespannten Zustand. Die Gasdruckfeder 11 wird mittels der Verriegelungseinrichtung in dieser Stellung gehalten. Durch Lösen der Verriegelungseinrichtung, insbesondere mittels des Auslösers 14, wird der Kolben 11b der Gasdruckfeder 11 aus dem Zylinder 11a herausgeschoben durch Expansion des unter Druck stehenden Gases in dem Zylinder 11a. Dies bewirkt eine Verschiebung der Lagerplatte 4 in Längsrichtung. Gleichzeitig wird die Schwenkplatte 3 um einen Winkel um die Schwenkachse geschwenkt. Beim manuellen Rückbewegen der Sitzkonsole 1 wird erneut Druckgas in dem Zylinder 11a komprimiert und so Energie gespeichert, die dann erneut genutzt werden kann, um die beschriebene lineare Bewegung und Verschwenkbewegung mindestens zu unterstützen oder auszuführen.

Für die Montage in einem Fahrzeug (z.B. PKW) wird eventuell ein fahrzeugspezifischer bzw. universeller Adaptersatz (Montagesatz) benötigt. Nach dem Einbau der Konsole wird der Autositz auf die Schwenkplatte 3 montiert. Vorzugsweise wird ein Nachrüstsitz verbaut. Je nach Fahrzeuggegebenheiten ist es aber auch möglich, den Originalsitz zu verwenden.

Um die erfindungsgemäße Sitzkonsole 1 zu betätigen, wird nach einem Öffnen einer Fahrzeugtür der Auslöser 14, der bevorzugt bei einer geschlossenen Tür nicht zugänglich ist, wodurch verhindert wird, dass der Fahrzeugsitz versehentlich aus der Grundstellung geschwenkt wird, betätigt, der wiederrum, über den Bowdenzug das Schloss 13 aus dem Schlossbügel 12 entriegelt. Zusätzlich könnte der Auslöser 14 noch so angeschlossen werden, dass er nur bei ausgeschaltetem Motor betätigt werden kann. Somit wird ein unbeabsichtigtes Freigeben der Verriegelungseinrichtung verhindert. Die vorgespannte Gasdruckfeder 11 schiebt die Lagerplatte 4 bis zum Erreichen der Endstellung nach vorne. Gleichzeitig dreht sich die Schwenkplatte 3 aus dem Fahrzeug heraus. Bei einem Vordersitz eines Fahrzeugs, das eine B-Säule aufweist, erfolgt die Drehung um die B-Säule. Mit einem Anschlag (Stellschraube 15), der in einer Nut 16 verschoben werden kann, um ihn in der gewünschten Position zu fixieren, ist es möglich, den Schwenkwinkel der Schwenkplatte 3 einfach und schnell zu begrenzen. Zum Einschwenken wird der Sitz bzw. die Schwenkplatte 3 zurück in das Fahrzeug gedrückt. Denkbar wäre auch der Einsatz eines Elektromotors, der das Einschwenken des Sitzes bewirkt. Das Schloss 13 rastet in der Endposition (Grundstellung) in den Schlossbügel 12 ein und die Gasdruckfeder 11, die im Prinzip zwei Funktionen hat, nämlich ein automatisches Ausschwenken und ein Haltemoment in der ausgefahrenen Endlage, wird erneut gespannt.

Die erfindungsgemäße Sitzkonsole 1 zeichnet sich dadurch aus, dass die gesamte Mechanik verdeckt ist, wobei die Linear- und Drehbewegung des Fahrzeugsitzes über die Zahnstange 10, das Zahnrad 9, und das Schienensystem (Schienen 5) realisiert wird. Bevorzugt weist die Schwenkplatte 3 eine Kassettenbauweise auf, wodurch eine extreme Steifigkeit bei gleichzeitiger Leichtigkeit erreicht wird. Somit ist es möglich, dass die Schwenkplatte 3 freischwebend, also nur an dem lagerbildenden Mittel (Drehlager), befestigt ist und somit keine weitere Abstützung der Schwenkplatte 3 notwendig ist.

Fig. 2 zeigt eine perspektivische Ansicht einer erfindungsgemäßen Sitzkonsole 1, gemäß Fig. 1, in der Grundstellung, in der ein nicht dargestellter Fahrzeugsitz in einer Grundstellung arretiert ist. Unter einer Grundstellung soll hierin verstanden sein, dass sich der Sitz in einer während der Fahrt des Fahrzeugs vorgesehen Position befindet.

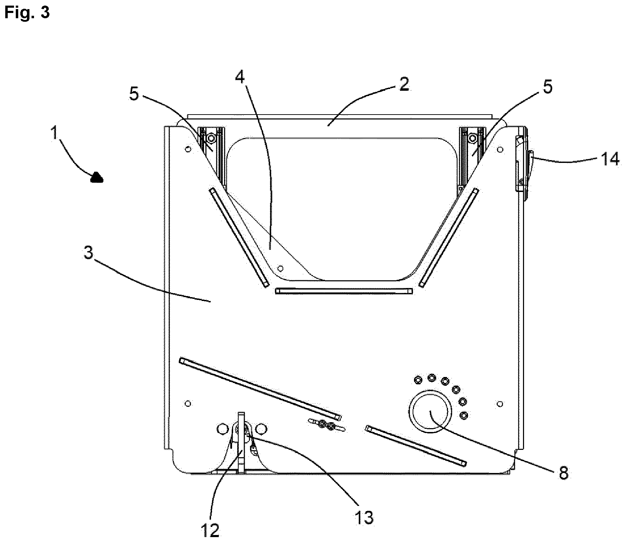

Die Fig. 3 und Fig. 4 zeigen Ansichten der erfindungsgemäßen Sitzkonsole 1, gemäß Fig. 1, von oben in einer Draufsicht, wobei in Fig. 4 einige Bauteile, die sich unterhalb der Schwenkplatte 3 oder der Lagerplatte 4 befinden, gestrichelt angedeutet sind. Angedeutet ist hierbei auch der einen Außenzug 17 und einen Innenzug 18, der mit dem Schloss 13 und dem Auslöser 14 verbunden ist, aufweisende Bowdenzug. Das Zahnrad 9 ist mittels mehrerer Schrauben 19 an der Schwenkplatte 3 fixiert.

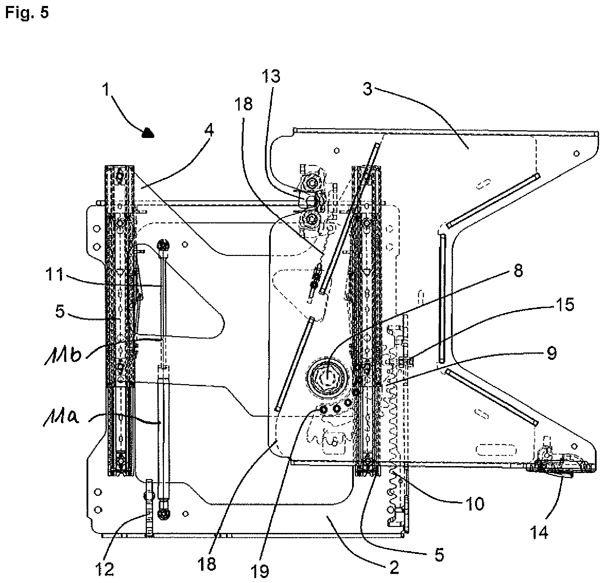

Fig. 5 zeigt eine Ansicht der erfindungsgemäßen Sitzkonsole 1, die sich in der ausgeschwenkten Endstellung befindet, von oben, wobei in Fig. 5 einige Bauteile, die sich unterhalb der Schwenkplatte 3 oder der Lagerplatte 4 befinden, gestrichelt angedeutet sind.. Die Gasdruckfeder 11 hat die Lagerplatte 4 linear nach vorne gedrückt, wodurch das formschlüssig mit der Zahnstange 10 verbundene Zahnrad 9 und das lagerbildende Mittel eine Drehung der Lagerplatte 4 um den Drehpunkt 8 bewirkt. Sobald das Zahnrad 9 auf den Anschlag (Stellschraube 15) trifft, wird die Drehbewegung beendet. Durch Verschiebung des Anschlags (Stellschraube 15) ist somit der Drehwinkel an die Gegebenheiten anpassbar.

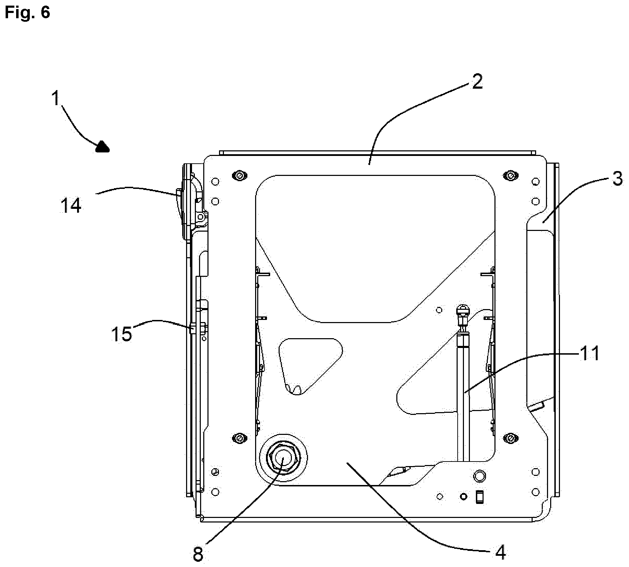

Fig. 6 zeigt eine Ansicht der erfindungsgemäßen Sitzkonsole 1, gemäß Fig. 1, von unten.

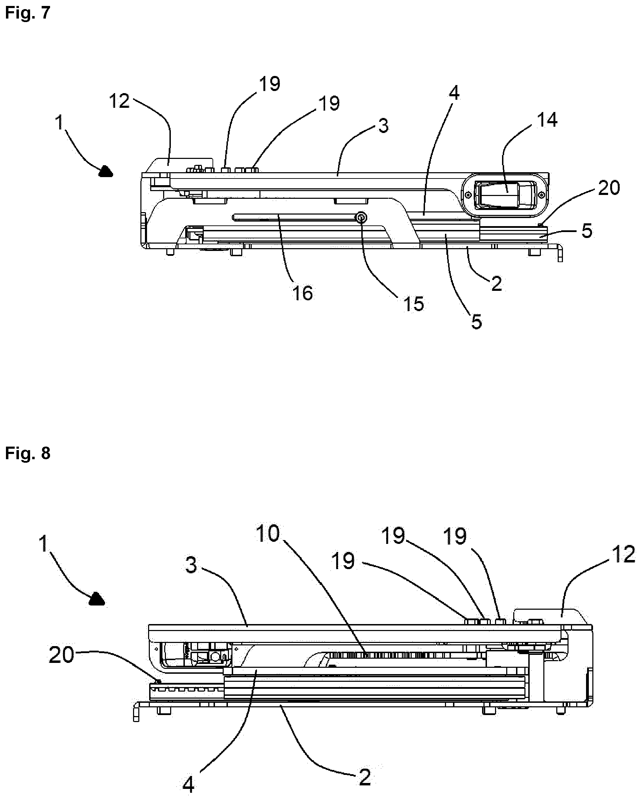

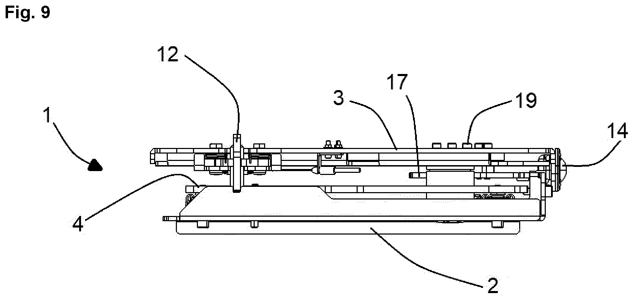

Die Fig. 7 bis Fig. 9 zeigen Seitenansichten der erfindungsgemäßen Sitzkonsole 1, gemäß Fig. 1. Aus Fig. 7 ist ersichtlich, dass die Schienen 5 eine Begrenzung 20 aufweisen, bei der spätestens die lineare Bewegung der Lagerplatte 4 gestoppt wird.

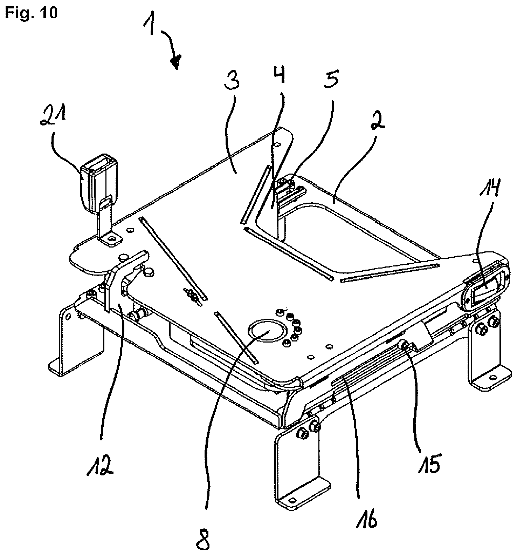

Fig. 10 zeigt eine perspektivische Ansicht der erfindungsgemäßen Sitzkonsole 1 in einer weiteren Ausführungsform. Hierbei weist die Sitzkonsole 1 zusätzlich zu den in den Figuren 1 bis 9 beschriebenen bevorzugten Komponenten ein Gurtschloss 21 auf. Das Gurtschloss 21 ist auf der Schwenkplatte 3 angeordnet.

Das Verfahren bzw. die Betriebsweise der erfindungsgemäßen Sitzkonsole 1 sind nachfolgend genauer beschrieben:
Bei der Bedienung der schwenkbaren Sitzkonsole 1 zum Ausschwenken des an der Sitzkonsole 1 montierten Fahrzeugsitzes aus einer Grundstellung in eine ausgeschwenkte Endstellung ist zunächst der Auslöser 14 zu betätigen. Mithilfe des Auslösers 14 wird über einen Bowdenzug 17,18 die Verriegelungseinrichtung entriegelt. Hierbei wird das Schloss 13 aus dem Schlossbügel 12 gelöst. Der Energiespeicher, insbesondere die Gasdruckfeder 11, initiiert dann eine lineare Verschiebung der Lagerplatte 4 der Sitzkonsole 1. Dabei greift das an der Schwenkplatte 3 angeordnete Zahnrad 9 in die an der Grundplatte 2 angeordnete Zahnstange 10 ein, sodass eine Schwenkbewegung der Schwenkplatte 3 ausgelöst wird. Dann wird durch die in der Gasdruckfeder 11 gespeicherte Energie die weitere axiale und/oder Schwenkbewegung ausgeführt. Die Sitzkonsole 1 wird somit vorzugsweise gleichzeitig linear verschoben und um die Schwenkachse gedreht. Aufgrund der Kopplung beider Bewegungsabläufe miteinander ist über die Begrenzung des linearen Verfahrweges der Lagerplatte 4, insbesondere mittels des Anschlages (Stellschraube 15), der Ausfahrwinkel der Schwenkplatte 3 einstellbar. Die Endstellung ist erreicht, entweder bei maximalem Kolbenweg der Gasdruckfeder 11 oder bei Erreichen des maximalen linearen Verfahrweges. Der maximale lineare Verfahrweg ist durch die Stellschraube 15 oder die Begrenzung 20 einstellbar. Später werden die Bewegungen in die andere Richtung ausgeführt durch einen Benutzer und erneut Energie durch Kompression des Gases in der Gasdruckfeder 11 gespeichert, sodass ein autonomer Energiespeicher verwirklicht ist, dessen gespeicherte Energie zukünftig erneut genutzt werden kann.

Für die Montage der Sitzkonsole 1 in einem Fahrzeug (z.B. PKW), insbesondere zum Aus- oder Nachrüsten eines Fahrzeugsitzes eines Fahrzeugs mit der Sitzkonsole 1, wird eventuell ein fahrzeugspezifischer bzw. universeller Adaptersatz (Montagesatz) benötigt. Hierfür wird ein Fahrzeugsitz (nicht dargestellt) von einem Fahrzeugsitzgestell (nicht dargestellt) getrennt, insbesondere wird der Fahrzeugsitz aus dem Fahrzeug demontiert. Im Anschluss wird die Sitzkonsole 1 auf das Sitzgestell montiert. Die Sitzkonsole 1 ist über das Sitzgestell fest mit einem Boden des Fahrzeugs verbunden. Nach dem Einbau der Sitzkonsole 1 in das Fahrzeug, insbesondere auf den Fahrzeugboden, wird der Fahrzeugsitz auf die Schwenkplatte 3 montiert. Vorzugsweise wird ein Nachrüstsitz, also ein anderer Fahrzeugsitz, als der vom Fahrzeughersteller serienmäßig verbaute, verwendet. In einer weiteren Ausführungsform ist die Sitzkonsole 1 ferner dazu eingerichtet, den ursprünglich eingebauten Fahrzeugsitz aufzunehmen. Die einzelnen Schritte der Montage können auch in anderer Reihenfolge vorgenommen werden.

Alle in der Beschreibung, den nachfolgenden Ansprüchen und der Zeichnung dargestellten Merkmale können sowohl einzeln als auch in beliebiger Kombination miteinander erfindungswesentlich sein.

Die Erfindung wird ferner beschrieben anhand der nachfolgenden Ausführungsbeispiele, worin:
Ausführungsbeispiel 1. Sitzkonsole (1) für ein Fahrzeug,
   - mit einer Schwenkplatte (3) zur Verbindung der Sitzkonsole (1) mit einem Fahrzeugsitz und
   - mit einer Grundplatte (2) zur Verbindung der Sitzkonsole (1) mit dem Fahrzeug, wobei die Grundplatte (2) Schienen (5) aufweist, durch die der Fahrzeugsitz linear verschiebbar ist,
   dadurch gekennzeichnet,
   dass zwischen der Schwenkplatte (3) und der Grundplatte (2) eine an den Schienen (5) der Grundplatte (2) fixierte Lagerplatte (4) angeordnet ist, wobei die Schwenkplatte (3) und die Lagerplatte (4) über ein lagerbildendes Mittel miteinander verbunden sind.
Ausführungsbeispiel 2. Sitzkonsole (1), nach Ausführungsbeispiel 1, dadurch gekennzeichnet,
   dass das lagerbildende Mittel eine an der Lagerplatte (4) angeordnete Lagerbuchse (6) und einen an der Schwenkplatte (3) angeordneten Lagerbolzen (7) aufweist.
Ausführungsbeispiel 3. Sitzkonsole (1), nach Ausführungsbeispiel 1 oder Ausführungsbeispiel 2,
   dadurch gekennzeichnet,
   dass das lagerbildende Mittel einen Drehpunkt (8) aufweist, der außermittig an der Sitzkonsole (1) angeordnet ist.
Ausführungsbeispiel 4. Sitzkonsole (1), nach einem der vorhergehenden Ausführungsbeispielen,
   dadurch gekennzeichnet,
   dass die Grundplatte (2) eine Zahnstange (10) aufweist, in die ein an der Schwenkplatte (3) angeordnetes Zahnrad (9) formschlüssig eingreift.
Ausführungsbeispiel 5. Sitzkonsole (1), nach einem der vorhergehenden Ausführungsbeispielen,
   dadurch gekennzeichnet,
   dass die Sitzkonsole (1) eine Verriegelungseinrichtung und/oder einen Elektromotor aufweist.
Ausführungsbeispiel 6. Sitzkonsole (1), nach Ausführungsbeispiel 5,
   dadurch gekennzeichnet,
   dass die Verriegelungseinrichtung ein an der Schwenkplatte (3) angeordnetes Schloss (13) und einen an der Grundplatte (2) angeordneten Schlossbügel (12) aufweist.
Ausführungsbeispiel 7. Sitzkonsole (1), nach Ausführungsbeispiel 5 oder Ausführungsbeispiel 6,
   dadurch gekennzeichnet,
   dass die Verriegelungseinrichtung einen an der Schwenkplatte (3) angeordneten Auslöser (14) aufweist.
Ausführungsbeispiel 8. Sitzkonsole (1), nach Ausführungsbeispiel 7,
   dadurch gekennzeichnet,
   dass der Auslöser (14) mittels eines Bowdenzugs mit der Verriegelungseinrichtung verbunden ist.
Ausführungsbeispiel 9. Sitzkonsole (1), nach einem der vorhergehenden Ausführungsbeispielen,
   dadurch gekennzeichnet,
   dass zwischen der Grundplatte (2) und der Lagerplatte (4) eine Gasdruckfeder (11) angeordnet ist.
Ausführungsbeispiel 10. Sitzkonsole (1), nach einem der vorhergehenden Ausführungsbeispielen,
   dadurch gekennzeichnet,
   dass die Sitzkonsole (1) zur Begrenzung der linearen Verschiebbarkeit des Fahrzeugsitzes einen Anschlag aufweist.
Ausführungsbeispiel 11. Sitzkonsole (1), nach Ausführungsbeispiel 10,
   dadurch gekennzeichnet,
   dass der Anschlag verstellbar ist.
Ausführungsbeispiel 12. Verfahren zur Bedienung einer schwenkbaren Sitzkonsole (1) eines Fahrzeugs, wobei die Sitzkonsole (1) eine Schwenkplatte (3) zur Verbindung der Sitzkonsole (1) mit dem Fahrzeugsitz und eine Grundplatte (2) zur Verbindung der Sitzkonsole (1) mit dem Fahrzeug aufweist, wobei die Grundplatte (2) Schienen (5) aufweist, durch die der Fahrzeugsitz aus einer Grundstellung in eine Endstellung bzw. aus einer Endstellung in eine Grundstellung linear verschiebbar ist,
   dadurch gekennzeichnet,
   dass zwischen der Schwenkplatte (3) und der Grundplatte (2) eine an den Schienen (5) der Grundplatte (2) fixierte Lagerplatte (4) angeordnet ist und die Schwenkplatte (3) und die Lagerplatte (4) über ein lagerbildendes Mittel miteinander verbunden sind, wodurch gleichzeitig zur Linearbewegung des Fahrzeugsitzes eine Drehbewegung des Fahrzeugsitzes realisiert wird.
Ausführungsbeispiel 13. Verfahren, nach Ausführungsbeispiel 12,
   dadurch gekennzeichnet,
   dass die Sitzkonsole (1) eine einen Auslöser (14) aufweisende Verriegelungseinrichtung aufweist und zwischen der Grundplatte (2) und der Lagerplatte (4) eine Gasdruckfeder (11) angeordnet ist, wodurch nach einem Öffnen der Verriegelungseinrichtung mittels des Auslösers (14) die Lagerplatte (4) mittels der Gasdruckfeder (11) aus ihrer Grundstellung in eine Endstellung bewegt wird.
Ausführungsbeispiel 14. Verfahren, nach Ausführungsbeispiel 13,
   dadurch gekennzeichnet,
   dass der Auslöser (14) nur bei einer geöffneten Fahrzeugtür und/oder bei einem ausgeschalteten Motor betätigbar ist.
Ausführungsbeispiel 15. Verfahren, nach einem der Ausführungsbeispiele 12 bis 14,
   dadurch gekennzeichnet,
   dass die Sitzkonsole (1) einen verstellbaren Anschlag aufweist, durch dessen Verstellung die lineare Verschiebbarkeit des Fahrzeugsitzes einstellbar ist.
Ausführungsbeispiel 16. Verfahren, nach einem der Ausführungsbeispiele 12 bis 15,
   dadurch gekennzeichnet,
   dass als Sitzkonsole (1) eine Sitzkonsole (1), nach einem der Ausführungsbeispiele 1 bis 11 eingesetzt wird.
Ausführungsbeispiel 17. Verfahren zum Aus- oder Nachrüsten eines Fahrzeugsitzes eines Fahrzeugs mit einer Schwenkfunktion,
   dadurch gekennzeichnet,
   dass ein Fahrzeugsitz (2) von seinem Sitzgestell getrennt wird, um anschließend zwischen dem Fahrzeugsitz und dem Sitzgestell eine schwenkbare Sitzkonsole (1) einzubauen, wobei die Sitzkonsole (1) eine Schwenkplatte (3) zur Verbindung der Sitzkonsole (1) mit dem Fahrzeugsitz und eine Grundplatte (2) zur Verbindung der Sitzkonsole (1) mit dem Fahrzeug aufweist, wobei die Grundplatte (2) Schienen (5) aufweist, durch die der Fahrzeugsitz aus einer Grundstellung in eine Endstellung bzw. aus einer Endstellung in eine Grundstellung linear verschiebbar ist, wobei zwischen der Schwenkplatte (3) und der Grundplatte (2) eine an den Schienen (5) der Grundplatte (2) fixierte Lagerplatte (4) angeordnet ist und die Schwenkplatte (3) und die Lagerplatte (4) über ein lagerbildendes Mittel miteinander verbunden sind, wodurch gleichzeitig zur Linearbewegung des Fahrzeugsitzes eine Drehbewegung des Fahrzeugsitzes realisiert wird.
Ausführungsbeispiel 18. Verfahren, nach Ausführungsbeispiel 17,
   dadurch gekennzeichnet,
   dass durch den Einbau der Sitzkonsole (1) werkseitig vorhandene Verstellmöglichkeiten und/oder Sicherheitseinrichtungen des Sitzgestells erhalten bleiben.
Ausführungsbeispiel 19. Verfahren, nach Ausführungsbeispiel 17 oder Ausführungsbeispiel 18,
   dadurch gekennzeichnet,
   dass als Sitzkonsole (1) eine Sitzkonsole (1), nach einem der Ausführungsbeispiele 1 bis 11 eingesetzt wird und/oder ein mit einer Sitzkonsole (1) aus- oder nachgerüsteter Fahrzeugsitz eines Fahrzeugs ein Verfahren zur Bedienung einer schwenkbaren Sitzkonsole (1) eines Fahrzeugs, gemäß einem der Ansprüche 12 bis 16, ermöglicht.

### Bezugszahlenliste

- 1: Sitzkonsole
- 2: Grundplatte
- 3: Schwenkplatte
- 4: Lagerplatte
- 5: Schiene
- 6: Lagerbuchse
- 7: Lagerbolzen
- 8: Drehpunkt
- 9: Zahnrad
- 10: Zahnstange
- 11: Gasdruckfeder
- 11a: Zylinder
- 11b: Kolben
- 12: Schlossbügel
- 13: Schloss
- 14: Auslöser
- 15: Stellschraube
- 16: Nut
- 17: Außenzug
- 18: Innenzug
- 19: Schraube
- 20: Begrenzung
- 21: Gurtschloss

## Patentansprüche

1. Sitzkonsole (1) für ein Fahrzeug,
- mit einer Schwenkplatte (3) zur Verbindung der Sitzkonsole (1) mit einem Fahrzeugsitz und
- mit einer Grundplatte (2) zur Verbindung der Sitzkonsole (1) mit dem Fahrzeug, wobei die Grundplatte (2) Schienen (5) aufweist, durch die der Fahrzeugsitz linear verschiebbar ist,
wobei zwischen der Schwenkplatte (3) und der Grundplatte (2) eine an den Schienen (5) der Grundplatte (2) fixierte Lagerplatte (4) angeordnet ist, wobei die Schwenkplatte (3) und die Lagerplatte (4) über ein Drehlager miteinander verbunden sind,
**dadurch gekennzeichnet, dass**
die Sitzkonsole (1) ferner einen Energiespeicher, insbesondere eine Gasdruckfeder (11), aufweist,
wobei der Energiespeicher dazu eingerichtet ist, den Fahrzeugsitz aus einer Grundstellung mittels einer kombinierten linearen Bewegung entlang der Schienen (5) und einer Drehbewegung um das Drehlager (6,7) in eine ausgeschwenkte Endstellung mindestens teilweise oder vollständig zu verschieben.

2. Sitzkonsole (1) nach Anspruch 1,
**dadurch gekennzeichnet,**
**dass** der Energiespeicher ein mechanischer Energiespeicher, insbesondere eine autonome Gasdruckfeder oder mechanische Feder wie eine Spiralfeder, und dazu eingerichtet ist, die Bewegung des Fahrzeugsitzes aus der Grundstellung in die Endstellung autonom zu bewirken.

3. Sitzkonsole (1), nach Anspruch 1 oder Anspruch 2,
**dadurch gekennzeichnet,**
**dass** das Drehlager (6,7) einen Drehpunkt (8) aufweist, der außermittig an der Sitzkonsole (1) angeordnet ist.

4. Sitzkonsole (1), nach einem der vorhergehenden Ansprüche,
**dadurch gekennzeichnet,**
**dass** die Grundplatte (2) eine Zahnstange (10) aufweist, in die ein an der Schwenkplatte (3), insbesondere an dem Drehlager (6,7), angeordnetes Zahnrad (9) formschlüssig eingreift.

5. Sitzkonsole (1), nach einem der vorhergehenden Ansprüche,
**dadurch gekennzeichnet,**
**dass** die Sitzkonsole (1) eine Verriegelungseinrichtung und/oder einen Elektromotor aufweist, wobei die Verriegelungseinrichtung einen an der Schwenkplatte (3) angeordneten Auslöser (14) umfasst.

6. Sitzkonsole (1), nach Anspruch 5,
**dadurch gekennzeichnet,**
**dass** die Verriegelungseinrichtung ein an der Schwenkplatte (3) angeordnetes Schloss (13) und einen an der Grundplatte (2) angeordneten Schlossbügel (12) aufweist.

7. Sitzkonsole (1), nach Anspruch 5 oder 6,
**dadurch gekennzeichnet,**
**dass** der Auslöser (14) mittels eines Bowdenzugs mit der Verriegelungseinrichtung verbunden ist.

8. Sitzkonsole (1), nach einem der vorhergehenden Ansprüche,
**dadurch gekennzeichnet,**
**dass** der Energiespeicher zwischen der Grundplatte (2) und der Lagerplatte (4) angeordnet ist.

9. Sitzkonsole (1), nach einem der vorhergehenden Ansprüche,
**dadurch gekennzeichnet,**
**dass** die Sitzkonsole (1) zur Begrenzung der linearen Verschiebbarkeit des Fahrzeugsitzes einen Anschlag aufweist, wobei der Anschlag verstellbar und dazu eingerichtet ist, die lineare Bewegung des Fahrzeugsitzes zu begrenzen.

10. Sitzkonsole (1), nach Anspruch 7,
**dadurch gekennzeichnet,**
**dass** der Bowdenzug wenigstens teilweise zwischen der Grundplatte (2) und der Schwenkplatte (3) angeordnet ist.

11. Sitzkonsole (1) für ein Fahrzeug, insbesondere nach mindestens einem der Ansprüche 1 bis 10,
- mit einer Schwenkplatte (3) zur Verbindung der Sitzkonsole (1) mit einem Fahrzeugsitz und
- mit einer Grundplatte (2) zur Verbindung der Sitzkonsole (1) mit dem Fahrzeug, wobei die Grundplatte (2) Schienen (5) aufweist, durch die der Fahrzeugsitz linear verschiebbar ist,
wobei zwischen der Schwenkplatte (3) und der Grundplatte (2) eine an den Schienen (5) der Grundplatte (2) fixierte Lagerplatte (4) angeordnet ist, wobei die Schwenkplatte (3) und die Lagerplatte (4) über ein Drehlager miteinander verbunden sind,
**dadurch gekennzeichnet, dass**
die Sitzkonsole (1) ferner ein Gurtschloss (21) aufweist,
wobei das Gurtschloss (21) an oder auf der Schwenkplatte (3) angeordnet, insbesondere fixiert, ist.

12. Sitzkonsole (1) nach Anspruch 11,
**gekennzeichnet durch** mindestens eines der kennzeichnenden Merkmale der Ansprüche 1-10.

13. Verfahren zur Bedienung einer schwenkbaren Sitzkonsole (1) eines Fahrzeugsitzes eines Fahrzeugs, insbesondere einer Sitzkonsole (1) nach mindestens einem der vorhergehenden Ansprüche, wobei das Verfahren die Schritte umfasst:
- Betätigung eines Auslösers,
- Entriegelung einer Verriegelungseinrichtung,
- Lineares Verschieben der Sitzkonsole (1), insbesondere des Fahrzeugsitzes, aus einer Grundstellung in eine Endstellung,
- Drehen der Sitzkonsole (1), insbesondere des Fahrzeugsitzes, um ein Drehlager der Sitzkonsole (1) aus einer Grundstellung in eine Endstellung,
wobei das lineare Verschieben und/oder das Drehen der Sitzkonsole (1), insbesondere des Fahrzeugsitzes, zumindest abschnittsweise durch von einem Energiespeicher bereitgestellte mechanische Energie unterstützt wird.

14. Verfahren, nach Anspruch 13,
**dadurch gekennzeichnet,**
**dass** das lineare Verschieben und das Drehen der Sitzkonsole (1), insbesondere des Fahrzeugsitzes, zumindest abschnittsweise gleichzeitig erfolgt.

15. Verfahren, nach Anspruch 13 oder 14,
**dadurch gekennzeichnet,**
**dass** der Auslöser (14) nur bei einer geöffneten Fahrzeugtür und/oder bei einem ausgeschalteten Motor betätigbar ist.

16. Verfahren zum Aus- oder Nachrüsten eines Fahrzeugsitzes eines Fahrzeugs mit einer schwenkbaren Sitzkonsole (1), insbesondere einer Sitzkonsole (1) nach mindestens einem der Ansprüche 1 bis 12, wobei das Verfahren die Schritte umfasst:
- Trennen eines Fahrzeugsitzes von seinem Sitzgestell,
- Einsetzen der schwenkbaren Sitzkonsole (1) zwischen dem Fahrzeugsitz und dem Sitzgestell,
- Verbinden einer Schwenkplatte (3) der Sitzkonsole (1) mit dem Fahrzeugsitz,
- Verbinden einer Grundplatte (2) der Sitzkonsole (1) mit dem Fahrzeug.
